Europäisches Patentamt

European Patent Office

Office européen des brevets

(19)

(11) Veröffentlichungsnummer: **0 202 261**

**B1**

(12) EUROPÄISCHE PATENTSCHRIFT

(45) Veröffentlichungstag der Patentschrift: **06.02.91**

(51) Int. Cl.⁵: **F 16 F 15/30,** F 16 C 15/00

(21) Anmeldenummer: **85905500.6**

(22) Anmeldetag: **15.11.85**

(86) Internationale Anmeldenummer:
**PCT/CH85/00163**

(87) Internationale Veröffentlichungsnummer:
**WO 86/03268 05.06.86 Gazette 86/12**

(54) SCHWUNGRAD UND VERFAHREN ZU DESSEN HERSTELUNG.

(30) Priorität: **19.11.84 CH 5505/84**

(43) Veröffentlichungstag der Anmeldung:
**26.11.86 Patentblatt 86/48**

(45) Bekanntmachung des Hinweises auf die
Patenterteilung:
**06.02.91 Patentblatt 91/06**

(84) Benannte Vertragsstaaten:
**AT BE CH DE FR GB IT LI LU NL SE**

(56) Entgegenhaltungen:
**FR-A-2 336 604**
**FR-A-2 359 695**
**US-A-4 023 437**
**US-A-4 186 245**
**US-A-4 359 912**
**US-A-4 370 899**

(73) Patentinhaber: **Egger, Hans R.**
**Frohburgstrasse 36**
**CH-8006 Zürich (CH)**

(72) Erfinder: **Asper, Hans, K. Dr.**
**Plattenstrasse 98**
**CH-8706 Meilen (CH)**
Erfinder: **Widmer, Johann**
**Triemlistrasse 88**
**CH-8047 Zürich (CH)**

(74) Vertreter: **Schaumburg, Thoenes & Englaender**
**Mauerkircherstrasse 31**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf Schwungräder mit Schwungmasse aus faserarmiertem Kunststoff, wobei die Armierung in Umfangsrichtung gewickelt ist.

Schwungräder sind ganz allgemein Energiespeicher. Ein historisches Anwendungsbeispiel eines Schwungrades als Energiespeicher ist das in den 50er Jahren im sogenannten Girobus verwendete Schwungrad. Dazu war ein ca. 1.5 Tonnen schweres Stahlschwungrad mit einem nutzbaren Energieeinhalt von ca. 4.5 KWh vorgesehen. Der auf die Rotormasse bezogene Nutzenergieinhalt beträgt beim Girobus nur ca. 3 Wh/kg während theoretisch mit Stahl ohne Rücksicht auf die Sicherheitsaspekte eine Energiedichte von ca. 60 Wh/kg erreicht werden könnte.

Vergleicht man diesen Energieinhalt von 3 Wh/kg des Stahlschwungrades mit dem mechanisch nutzbaren Energieinhalt von Dieselöl oder Benzin von ca. 3 KWh/kg versteht man sofort, dass sich zumindest bisher die Schwungradtechnologie für Fahrzeugantriebe noch nicht durchsetzen konnte.

Ab ca. 1970 wurden Schwungräder der eingangs genannten Art bekannt. Diese neuen Schwungräder weisen gegenüber den herkömmlichen Stahlschwungrädern eine Reihe von Vorteilen auf, wie höhere Umfangsgeschwindigkeiten (ca. 500 m/s) mit der daraus resultierenden höheren Energiedichte (ca. 20—80 Wh/kg Rotor) sowie ein äusserst gefahrloses Verhalten beim Bersten. Diese Eigenschaft erklärt sich vorallem dadurch, dass im Fall eines Berstens ca. 95% der Rotationsenergie in Deformationsenergie (d.h. in Wärme) umgewandelt wird und nur noch ca. 5% der Rotationsenergie von einem Schutzgehäuse absorbiert werden müssen. Die Anforderung an das Schutzgehäuse vereinfacht sich zudem nochmals, weil Schwungräder aus Fasermaerialien beim Bersten in tausende von kleinen Partikeln zerfallen. Im gegensatz dazu zerbricht ein aus massivem Stahl bestehendes Schwungrad beim Bersten in wenige Teilstücke.

Infolge der um einen Faktor 10 höheren Umfangsgeschwindigkeit bei Schwungrädern aus Fasermaterialien gegenüber herkömmlichen Stahlschwungrädern reduziert sich bei gleichem Energieinhalt die Masse um den Faktor 100, d.h. beispielsweise von 1200 kg bei Stahl auf 12 kg bei Fasermaterial, was die Anforderung an die Rotorlagerung wesentlich vereinfacht.

Neben den erwähnten Vorteilen weisen Schwungräder aus hochfesten Fasermaterialien einen, die praktische Anwendung direkt betreffenden Nachteil auf, nämlich die hohen Herstellungskosten. Alle bisher bekannten Schwungräder der eingangs im Oberbegriff des Anspruchs 1 und erwähnten Art sind mit Einzelfasern oder Fasergarnen armiert, wobei einige Wicklungen eines Haltebandes dem äuberen Umfang des Rades begrenzen können (FR—A—2359695). Sie erfordern ein aufwendiges Wickelverfahren mit präziser Faserführung bzw. mit einer vom Wickelradius abhängigen Zugsvorspannung. Zur Verbindung der Fasern untereinander sowie zur Aufnahme der bei der Rotation auftretenden radialen Zugkräfte dient nur die vorwiegend aus Epoxyharz bestehende Kunststoffmatrix.

Es ist daher Zweck der Erfindung ein Schwungrad der eingangs genannten Art zu schaffen, das die vorstehend erwähnten Nachteile weitgehend vermeidet, insbesondere die Beanspruchung der Kunststoffmatrix vermindert. Zu diesem Zweck weist das vorgeschlagene Schwungrad erfindungsgemäss die im Kennzeichen des Patentanspruches 1 definierten Merkmale auf. Da hier die Fasern der Armierung als solche bereits einen Verbund untereinander bilden, vermindert sich — bei hohen Drehzahlen — die Beanspruchung der Kunststoffmatrix. Darüberhinaus wird der Wickelvorgang vereinfacht gegebenenfalls beschleunigt, weil die Führung eines Bandes bzw. einer Litze eines geringeren technischen Aufwandes bedarf.

Merkmale bevorzugter Ausführungsformen sind in den abhängigen Ansprüchen definiert. Das Verfahren zur Herstellung des Schwungrades ist in Patentanspruch 11 definiert.

## Patentansprüche

1. Schwungrad mit Schwungmasse aus faserarmiertem Kunststoff, wobei die Armierung in Umfangsrichtung gewickelt und in einer Kunststoffmatrix eingebettet ist, dadurch gekennzeichnet, dass die Armierung die Form eines gewobenen Bandes oder einer Litze aufweist, die um die Drehachse gewickelt und in der Kunststoffmatrix eingebettet ist.

2. Schwungrad nach Patentanspruch 1, bei dem die Armierung ein gewobenes Band ist, dadurch gekennzeichnet, dass dessen Kette in Wickelrichtung verläuft.

3. Schwungrad nach Patentanspruch 1, bei dem die Armierung ein gewobenes Band ist, dadurch gekennzeichnet, dass die Kette des Bandes mit der Wickelrichtung einen spitzen Winkel von vorzugsweise 45 Grad einschliesst.

4. Schwungrad nach einem der Patentansprüche 2 und 3, dadurch gekennzeichnet, dass das Band ein Gewebe aus Monofilamenten ist.

5. Schwungrad nach einem der vorangehenden Patentansprüche, dadurch gekennzeichnet, dass das Band bzw. die Litze grösstenteils aus Glasfasern vorzugsweise aus E-, R- oder S-Glasfasern ist.

6. Schwungrad nach Patentansprüchen 1—4, dadurch gekennzeichnet, dass das Band bzw. die Litze aus Polyaramidfasern beispielsweise Kevlar ist.

7. Schwungrad nach Patentansprüchen 1—4, dadurch gekennzeichnet, dass das Band bzw. die Litze aus Kohlenstoffasern ist.

8. Schwungrad nach Patentansprüchen 1—4, dadurch gekennzeichnet, dass das Band bzw. die Litze aus Metallwhiskern ist.

9. Schwungrad nach einem der Patentansprüche 1—8, dadurch gekennzeichnet, dass die Kunststoffmatrix aus einem Kunststoffharz insbesondere einem Epoxyharz ist.

10. Schwungrad nach einem der Patentansprüche 1—9, dadurch gekennzeichnet, dass das Band bzw. die Litze in Form einer Scheibenwicklung gewickelt ist.

11. Verfahren zur Herstellung eines Schwungrades nach einem der Patentansprüche 1—10, dadurch gekennzeichnet, dass das Band bzw. die Litze von einem Lieferwerk abgezogen, in Längsrichtung vorgespannt, mit Kunststoffharz getränkt und in vorgespanntem Zustand zu einem Wickel aufgewickelt wird und danach der Wickel unter Drehung und Zufuhr von Wärme im Vakuum ausgehärtet wird.

12. Verfahren nach Patentanspruch 11, dadurch gekennzeichnet, dass die Vorspannung des Bandes bzw. der Litze in Abhängigkeit des Wickeldurchmessers verändert wird.

13. Verfahren nach Patentanspruch 12, dadurch gekennzeichnet, dass die Vorspannung von einem Mindestwert bei Wickelbeginn auf einen Höchstwert bei etwa halbem Wickeldurchmesser gesteigert wird und danach wieder vermindert wird.

14. Verfahren nach einem der Ansprüche 11—13, dadurch gekennzeichnet, dass der Wickel nach Aushärtung spanabhebend überarbeitet wird.

**Revendications**

1. Volant d'inertie avec masse d'inertie en matière synthétique armée de fibres, dans lequel l'armature est enroulée en sens circonférentiel et noyée dans une matrice en matière synthétique, caractérisé en ce que l'armature présente la forme d'une bande tissée ou d'un toron qui est enroulé autour de l'axe de rotation et noyé dans la matrice en matière synthétique.

2. Volant d'inertie selon la revendication 1, dans lequel l'armature est une bande tissée, caractérisé en ce que la chaîne de la bande s'étend dans le sens de l'enroulement.

3. Volant d'inertie selon la revendication 1, dans lequel l'armature est une bande tissée, caractérisé en ce que la chaîne de la bande fait avec la direction d'enroulement un angle aigu de préférence égal à 45 degrés.

4. Volant d'inertie selon la revendication 2 ou 3, caractérisé en ce que la bande est un tissu de monofilaments.

5. Volant d'inertie selon l'une des revendications précédentes, caractérisé en ce que la bande ou le toron est constitué dans sa majeure partie de fibres de verre, de préférence de fibres de verre E, R ou S.

6. Volant d'inertie selon les revendications 1 à 4, caractérisé en ce que la bande ou le toron est constitué de fibres de polyamide par exemple de Kevlar.

7. Volant d'inertie selon les revendications 1 à 4 caractérisé en ce que la bande ou le toron est constitué de fibres de carbone.

8. Volant d'inertie selon les revendications 1 à 4 caractérisé en ce que la bande ou le toron est constitué de barbes métalliques.

9. Volant d'inertie selon l'une des revendications 1 à 8, caractérisé en ce que la matrice en matière synthétique est en résine synthétique, notamment une résine époxy.

10. Volant d'inertie selon l'une des revendications 1 à 9, caractérisé en ce que la bande ou le toron est enroulé sous la forme d'un enroulement plat en disque.

11. Procédé de fabrication d'un volant d'inertie selon l'une des revendications 1 à 10, caractérisé en ce que la bande ou le toron est tiré d'un dispositif d'alimentation, précontraint en sens longitudinal, imprégné de résine synthétique, et enroulé à l'état précontraint et ensuite l'enroulement est durci sous vide, pendant la rotation et avec apport de chaleur.

12. Procédé selon la revendication 11, caractérisé en ce que la précontrainte de la bande ou du toron est modifiée en fonction du diamètre de l'enroulement.

13. Procédé selon la revendication 12, caractérisé en ce que la précontrainte est augmentée d'une valeur minimale au début de l'enroulement jusqu'à une valeur maximale environ à mi-diamètre de l'enroulement, puis à nouveau diminuée.

14. Procédé selon l'une des revendications 11 à 13, caractérisé en ce qu'après le durcissement l'enroulement est travaillé par enlèvement de matière.

**Claims**

1. Fly wheel with a flywheel mass of fibre armored synthetic material, wherein the armoring is wound in circumferential direction and embedded in a matrix of synthetic material, characterized in that the armoring has the form of a woven band or cord which is wound around the axis of rotation and embedded in the matrix of synthetic material.

2. Fly wheel according to claim 1, in which the armoring is a woven band, characterized in that the chain thereof extends in winding direction.

3. Fly wheel according to claim 1, in which the armoring is a woven band, characterized in that the chain of the band forms an acute angle of preferably 45° with the winding direction.

4. Fly wheel according to any one of claims 2 and 3, characterized in that the band is a fabric made of mono filaments.

5. Fly wheel according to any one of the foregoing claims, characterized in that the band or the cord are mainly made of glass fibres, preferably of E, R or S glass fibres.

6. Fly wheel according to any one of claims 1 through 4, characterized in that the band or cord is made of polyaramide fibres, for instance Kevlar.

7. Fly wheel according to any one of claims 1 through 4, characterized in that the band or cord are made of carbon fibres.

8. Fly wheel according to any one of claims 1 through 4, characterized in that the band or cord are made of metal whiskers.

9. Fly wheel according to any one of claims 1 through 8, characterized in that the matrix of synthetic material is made of a synthetic resin, especially of an epoxy resin.

10. Fly wheel according to any one of claims 1 through 9, characterized in that the band or cord is wound in form of a disk winding.

11. Method for the production of a fly wheel according to any one of claims 1 through 10, characterized in that the band or cord are pulled from a supply means, prestressed in longitudinal direction, impregnated with a synthetic resin, and wound to a coil in a prestressed state, and thereupon the coil is cured during rotation under heat supply and vacuum conditions.

12. Method according to claim 11, characterized in that the prestress of the band or cord is varied dependent on the winding diameter.

13. Method according to claim 12, characterized in that the prestress is increased from a minimum value at the start of winding to a maximum value at approximately half the winding diameter and thereafter is again reduced.

14. Method according to any one of claims 11 through 13, characterized in that the coil is reworked by machining after curing.